# EUROPÄISCHE PATENTSCHRIFT

(11) **EP 1 016 505 B1**
(45) Veröffentlichungstag und Bekanntmachung des Hinweises auf die Patenterteilung: **19.01.2005**
(21) Anmeldenummer: 99122350.4
(22) Anmeldetag: 10.11.1999
(51) Int. Cl.: B25F 5/02, B24B 23/02, B27B 9/00

(54) **Elektrowerkzeug, insbesondere Winkelschleifer**
Electric power tool, especially an angle grinder
Outil à moteur électrique, en particulier meuleuse d'angle

(30) Priorität: 31.12.1998 DE 19860847; 08.01.1999 DE 19900402
(43) Veröffentlichungstag der Anmeldung: 05.07.2000
(73) Patentinhaber: C. & E. Fein GmbH, 73529 Schwäbisch-Gmünd-Bargau (DE)
(72) Erfinder: Fink, Manfred, 74182 Obersulm (DE); Rudolf, Boris, 70192 Stuttgart (DE)
(74) Vertreter: Gahlert, Stefan, Dr.-Ing.

(56) Entgegenhaltungen:
- EP-A- 0 493 033
- WO-A-92/13678
- DE-A- 4 021 277
- DE-A- 4 022 668
- DE-A- 19 532 299
- DE-A- 19 546 328
- US-A- 2 155 082
- PATENT ABSTRACTS OF JAPAN vol. 1998, no. 11, 30. September 1998 (1998-09-30) -& JP 10 166283 A (RYOBI LTD), 23. Juni 1998 (1998-06-23)

## Beschreibung

Die Erfindung betrifft ein Elektrowerkzeug, insbesondere einen Winkelschleifer, mit einem länglichen Motorgehäuse, in dem ein Elektromotor aufgenommen ist, mit einem Getriebegehäuse an einem ersten Ende des Motorgehäuses zur Aufnahme eines Getriebes zum Antrieb einer Arbeitsspindel, und mit einem Griffteil, das an einem zweiten Ende des Motorgehäuses drehbar festgelegt ist und in dem ein Griffschalter angeordnet ist, wobei das Griffteil gegenüber dem Motorgehäuse in mindestens vier vorgegebene Winkelpositionen verdrehbar und in diesen verrastbar ist.

Ein derartiges Elektrowerkzeug ist aus Patent Abstracts of Japan vol. 1998, Nr.11, 30. September 1998 (1998-09-30) & JP 10 166283 A (Ryobi LTD), 23. Juni 1998 (1998-06-23) bekannt.

Ein derartiger Winkelschleifer ist vorteilhaft zwischen verschiedenen Arbeitspositionen verstellbar, um etwa ein Arbeiten für einen Linkshänder und einen Rechtshänder zu ermöglichen und um sowohl ein sogenanntes Schruppen als auch ein sogenanntes Trennschleifen in einfacher Weise zu erlauben.

Es fehlen bei dem vorbekannten Winkelschleifer jedoch Sicherheitsmerkmale, durch die gewährleistet ist, dass der Griffschalter am Griffteil nur dann betätigt werden kann, wenn sich das Griffteil in einer geeigneten verrasteten Position befindet.

Aus der DE-A-195 46 328 ist ein ähnlicher Winkelschleifer bekannt.

Der bekannte Winkelschleifer weist ein bügelförmiges Griffteil mit einem Griffschalter auf, das am Ende eines Motorgehäuses drehbar festgelegt ist und in insgesamt drei um jeweils 90° zueinander versetzte Winkelpositionen in bezug auf das Motorgehäuse verdrehbar ist. Dies ermöglicht es, den Winkelschleifer sowohl für Rechtshänder als auch für Linkshänder in besonders ergonomischer Weise zu halten, wenn man berücksichtigt, daß zusätzlich im vorderen Bereich des Motorgehäuses noch ein zweiter, stielförmig ausgebildeter Handgriff wahlweise rechts oder links am Gehäuse eingeschraubt werden kann. Ferner wird durch eine derartige Verdrehmöglichkeit ein Umstellen des Winkelschleifers zwischen Trennschleifen und Schruppschleifen ermöglicht, wobei beim Trennschleifen wahlweise entweder mit einer nach rechts aus dem Getriebekopf hervorstehenden Schleifspindel oder mit einer nach links aus dem Getriebekopf hervorstehenden Schleifspindel gearbeitet werden kann.

Zur Arretierung in den verschiedenen Winkelpositionen sind am dem Griffteil zugewandten Ende des Motorgehäuses Aussparungen vorgesehen, in die ein in Axialrichtung vorgespanntes Verriegelungselement eingreift. Soll das Griffteil aus einer Winkelposition in eine andere Winkelposition verdreht werden, so muß zunächst eine Handhabe betätigt werden, um das Verriegelungselement entgegen der Federspannung in Axialrichtung aus der betreffenden Ausnehmung freizugeben, so daß das Griffteil verdreht werden kann, bis in der nächsten vorgegebenen Winkelposition das Verriegelungselement wieder in einen Vorsprung einrastet.

Bei einem weiteren Elektrowerkzeug, das aus der DE 40 21 277 A1 bekannt ist und das als Trennschleifer, Heckenschere, Freischneider oder Motorkettensäge einsetzbar ist, ist ein bügelförmiger Handgriff am Ende eines Motorgehäuses gleichfalls in drei verschiedene, zueinander um 90° versetzte Winkelpositionen verstellbar und in diesen verrastbar. Zur Verrastung ist eine am Handgriff gelagerte Sperrklinke vorgesehen, die mit einem Vorsprung in eine entsprechende Vertiefung des Motorgehäuses eingreift und die von einer Feder in Richtung einer Arretierstellung belastet ist.

Vor diesem Hintergrund liegt der Erfindung die Aufgabe zugrunde, ein verbessertes Elektrowerkzeug zu schaffen, bei dem ein unbeabsichtigtes Anlaufen des Elektrowerkzeugs beim Ergreifen des Griffteils vermieden wird und eine Betätigung nur bewusst ermöglicht wird.

Diese Aufgabe wird bei einem Elektrowerkzeug gemäß der eingangs genannten Art dadurch gelöst, dass am Griffteil ein Arretierungshebel an einer Schwenkachse verschwenkbar gelagert ist, der einen ersten als Drucktaste ausgebildeten von der Schwenkachse in Richtung des Motorgehäuses abstehenden Teil aufweist, an dessen äußerem Ende ein Vorsprung ausgebildet ist, der in eine der Aussparungen eines am Motorgehäuse vorgesehenen zentralen Ringflansches einrastbar ist, und der einen etwa rechtwinklig zum ersten Teil von der Schwenkachse abstehenden zweiten Teil aufweist, der mit der Grifftaste des Griffschalters derart zusammenwirkt, dass ein Eindrücken der Grifftaste zum Einschalten des Elektromotors nur dann ermöglicht ist, wenn zuvor die Drucktaste durch Eindrücken in eine Aktivierungsstellung überführt wurde, so dass der Vorsprung des Arretierungshebels in eine der radialen Aussparungen am Ringflansch des Motorgehäuses eingreift.

Auf diese Weise wird mit einfachen Mitteln ein unbeabsichtigtes Anlaufen des Winkelschleifers beim Ergreifen des Griffschalters vermieden. Ein Benutzer muss zunächst die Drucktaste niederdrücken, bevor er die Grifftaste des Griffschalters betätigen kann.

Mit dem erfindungsgemäßen Elektrowerkzeug wird ein Arbeiten insbesondere an Deckenbereichen erleichtert. Schrupparbeiten an Dekkenbereichen treten bspw. im Wagonbau auf. Hierbei muß das Elektrowerkzeug überkopf gehalten werden, um Teile zu entgraten oder dgl. Derartige Arbeiten werden erfindungsgemäß erheblich erleichtert, da das Griffteil um 180° gegenüber seiner Normalposition verdreht werden kann. Weitere Vorteile bieten sich bei stationärem Einsatz des Elektrowerkzeugs.

In zusätzlicher Weiterbildung der Erfindung ist zwischen Motorgehäuse und Griffteil eine Drehwinkelbegrenzung zur Begrenzung des maximalen Drehwinkels zwischen dem Motorgehäuse und dem Griffteil vorgesehen.

Durch diese Maßnahme wird es verhindert, daß das Griffteil mehrfach gegenüber dem Motorgehäuse verdreht werden kann, was sonst zu Schäden an den elektrischen Verbindungsleitungen zwischen dem Griffteil und dem Motorgehäuse führen könnte.

In vorteilhafter Weiterbildung der Erfindung weist der Griffschalter eine Grifftaste auf, die gegen eine Betätigung verriegelt ist, wenn sich das Griffteil nicht in einer der vorgegebenen Winkelpositionen befindet und mit dem Motorgehäuse verrastet ist.

Hierdurch wird ein Einschalten des Elektrowerkzeuges verhindert, wenn sich das Griffteil nicht in einer stabilen Position in bezug auf das Motorgehäuse befindet, so daß ein unbeabsichtigtes Verdrehen des Griffteils gegenüber dem Motorgehäuse während des Arbeitens und eine damit einhergehende Unfallgefahr vermieden wird.

Gemäß einer weiteren Ausführung der Erfindung ist am Motorgehäuse ein zentraler Ringflansch vorgesehen, in dem radiale Aussparungen vorgesehen sind, in die ein Vorsprung eines verschwenkbar gelagerten und in eine Arretierungsstellung vorgespannten Verriegelungshebels in jeweils einer der vorgegebenen Winkelpositionen einrastbar ist.

Auf diese Weise ergibt sich eine besonders einfache Arretierungsmöglichkeit für das Griffteil in den vorgegebenen Winkelpositionen am Motorgehäuse, wobei außerdem ein besonders platzsparender Aufbau verwirklicht ist. Es wird so vermieden, daß sich das Griffteil unbeabsichtigt verdrehen kann. Ist eine Verdrehung des Griffteils in eine andere Winkelstellung in bezug auf das Motorgehäuse erwünscht, so muß vielmehr zunächst die Verriegelungstaste niedergedrückt werden, woraufhin dann das Griffteil gegenüber dem Motorgehäuse verdreht werden kann, bis die Verriegelungstaste wieder in einer der vorgegebenen Winkelpositionen in eine der radialen Aussparungen am Motorgehäuse eingreift und das Griffteil gegen eine weitere Verdrehung gegenüber dem Motorgehäuse verriegelt.

In zusätzlicher Weiterbildung der Erfindung ist die Grifftaste am Motorgehäuse abgewandten Ende des Griffteils verschwenkbar festgelegt und gegen eine Bewegung in eine Aktivierungsstellung zum Einschalten des Motors vorgespannt, und weist an ihrem freien Ende einen Steg auf, der in einer Sperrstellung bei nicht eingedrückter Drucktaste an einem Vorsprung am zweiten Teil des Arretierungshebels anschlägt, so daß eine Betätigung der Grifftaste zum Einschalten des Motors verhindert wird.

In zusätzlicher Weiterbildung dieser Ausführung ist die Grifftaste bei eingedrückter Drucktaste entgegen einer Federkraft an dem Vorsprung vorbei in die Aktivierungsstellung zum Einschalten des Elektromotors bewegbar, wobei der Steg an der Grifftaste mit dem zweiten Teil des Arretierungshebels zusammenwirkt, um eine Bewegung desselben aus der Aktivierungsstellung der Drucktaste zu verhindern.

Auf diese Weise wird gewährleistet, daß bei Arbeitsbeginn die Drucktaste lediglich einmal eingedrückt werden muß und anschließend, nachdem der Griffschalter betätigt wurde, die Drucktaste in ihrer Aktivierungsstellung verbleibt, so daß sich eine Dauerbetriebsstellung ergibt. Wird anschließend die Grifftaste losgelassen, so gibt der Arretierungshebel die Grifftaste wieder frei, so daß anschließend zunächst wieder die Drucktaste eingedrückt werden muß, bevor der Griffschalter erneut aktiviert werden kann.

Gemäß einer weiteren Ausführung der Erfindung weist das Motorgehäuse an seiner dem Griffteil zugewandten Seite einen zentralen zylindrischen Zapfen mit einem Durchlaß zur Kabeldurchführung auf, der den Ringflansch durchsetzt, wobei am Griffteil nach innen hervorstehende Stege vorgesehen sind, die auf der Außenoberfläche des Zapfens und in einem Zwischenraum zwischen dem Ringflansch und einer Stirnseite des Motorgehäuses geführt sind.

Durch diese Maßnahme wird eine gute Führung des Griffteils am Motorgehäuse gewährleistet und eine leichte Verdrehbarkeit bei nur geringer Reibung sichergestellt. Auch wird eine einfache und kostengünstige Herstellbarkeit gewährleistet, insbesondere wenn das Griffteil zwei zusammensetzbare Gehäuseschalen aufweist.

In zusätzlicher Weiterbildung der Erfindung weist das Griffteil keine Lüfterschlitze auf.

Dies hat den Vorteil, daß der empfindliche Griffschalter keiner Verschmutzung durch eindringende Schmutzpartikel ausgesetzt ist. Lüfterschlitze können statt dessen beispielsweise im Motorgehäuse vorgesehen sein.

Ausführungsbeispiele der Erfindung sind in der Zeichnung dargestellt und werden in der nachfolgenden Beschreibung näher erläutert. Es zeigen:
- Fig. 1: eine perspektivische Ansicht eines erfindungsgemäßen Elektrowerkzeuges am Beispiel eines Winkelschleifers;
- Fig. 2: eine Ansicht des Elektrowerkzeuges gemäß Fig. 1, auf der lediglich das dem Griffteil zugewandte Ende des Motorgehäuses und das Griffteil erkennbar ist, wobei eine Gehäusehälfte des Griffteils abgenommen wurde;
- Fig. 3: eine Explosionsdarstellung der rechten Gehäusehälfte des Griffteils mit Verriegelungstaste und zugehöriger Feder, sowie des Griffschalters, der mit dem Arretierungshebel zu einer Einheit montiert ist;
- Fig. 4: eine Ansicht des Motorgehäuses vom Griffteil aus und
- Fig. 5: eine Explosionsdarstellung des Motorgehäuses mit vorderem Motorgehäuseteil, hinterem Motorgehäuseteil und einem Einschubelement für das hintere Motorgehäuseteil nebst Zubehörteilen.

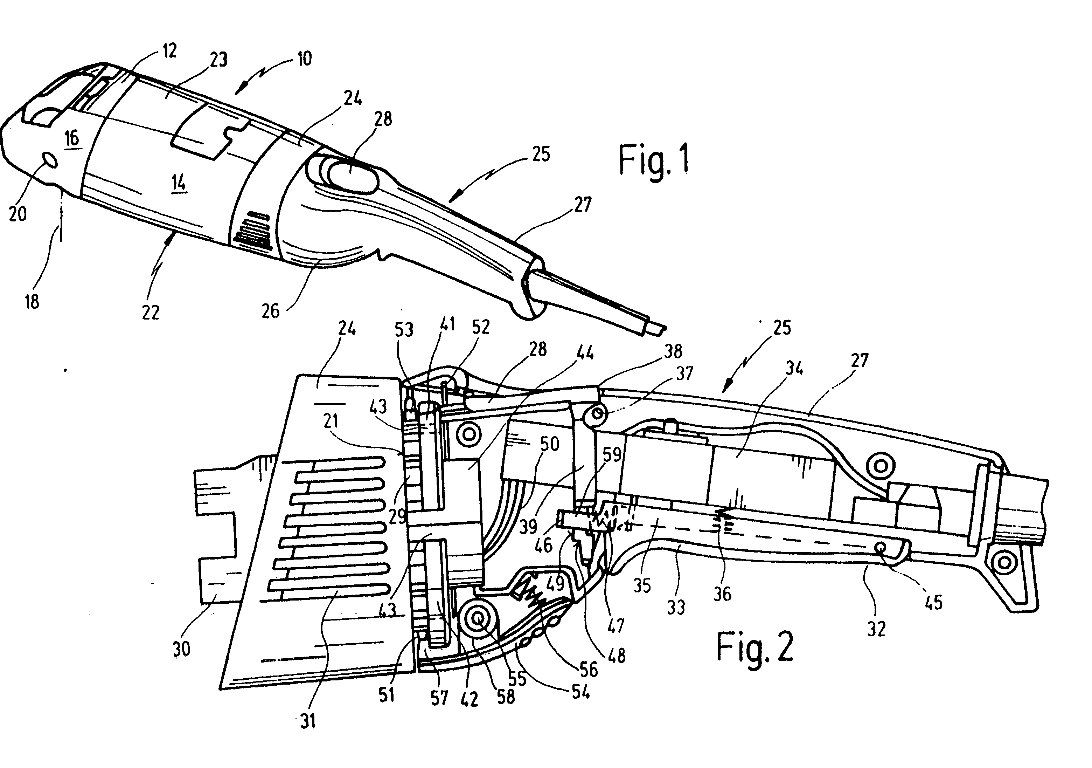

In Fig. 1 ist ein erfindungsgemäßes Elektrowerkzeug perspektivisch dargestellt und insgesamt mit der Ziffer 10 bezeichnet. Bei dem dargestellten Elektrowerkzeug 10 handelt es sich um einen Winkelschleifer, der als sogenannter Zweihand-Winkelschleifer ausgeführt ist und an seinem hinteren Ende ein insgesamt mit der Ziffer 25 bezeichnetes Griffteil aufweist, in dem ein Griffschalter vorgesehen ist (vgl. Fig. 2). Am oberen Ende des Griffteils ist eine Drucktaste 28 vorgesehen, deren Funktion im folgenden noch näher erläutert wird.

Das Elektrowerkzeug 10 umfaßt ferner ein insgesamt mit der Ziffer 22 bezeichnetes Motorgehäuse, das ein vorderes Motorgehäuseteil 23 zur Aufnahme eines Elektromotors 14, sowie ein hinteres Motorgehäuseteil 24 aufweist, an den sich das Griffteil 25 anschließt. An das vordere Motorgehäuseteil 23 schließt sich ein Getriebegehäuse 12 an, in dem ein Getriebe 16 zum Antrieb einer Arbeitsspindel vorgesehen ist, die lediglich mit der Ziffer 18 schematisch angedeutet ist. Auf der linken Seite des Getriebegehäuses 12 ist ferner eine Aufnahme 20 dargestellt, in die ein stielförmiger Zusatzhandgriff einschraubbar ist, so daß das Elektrowerkzeug 10 mit einer vorderen Hand an dem Zusatzhandgriff und mit einer hinteren Hand am Griffteil 25 gehalten werden kann. Es versteht sich, daß auf der gegenüberliegenden rechten Seite des Getriebegehäuses 12 eine weitere Aufnahme für den Zusatzhandgriff vorgesehen ist, so daß das Elektrowerkzeug 10 wahlweise für einen Rechtshänder- oder einen Linkshänderbetrieb geeignet ist.

In Fig. 1 ist die grundsätzlich bei einem Winkelschleifer vorgesehene Schutzhaube der Übersichtlichkeit halber nicht dargestellt.

Das Griffteil 25 weist ein erstes, linkes Griffgehäuseteil 26 und ein zweites, rechtes Griffgehäuseteil 27 auf, deren Funktion nachfolgend noch näher erläutert wird.

Das Griffteil 25 läßt sich aus der in Fig. 1 dargestellten Grundposition, in der die Grifftaste 33 gemäß Fig. 2 nach unten weist, zweimal um einen Winkel von jeweils 90° nach links, d.h. entgegen dem Uhrzeigersinn, verdrehen und einmal aus der in Fig. 1 dargestellten Grundstellung um 90° nach rechts, d.h. im Uhrzeigersinn verdrehen.

Durch diese Verdrehmöglichkeit ist ein Umstellen zwischen einem Schruppschleifen, bei dem eine Oberfläche mit einer Schleifscheibe flächig bearbeitet wird, und zwischen einem Trennen, bei dem ein Werkstück mit der Stirnfläche einer Trennscheibe durchtrennt wird, ermöglicht. Ferner läßt sich durch die Verdrehmöglichkeit des Griffteils 25 um 2 x 90° in eine Richtung, d.h. also um 180°, der Griffschalter auch auf die Oberseite des Elektrowerkzeugs 10 verdrehen. Eine solche Griffposition ist insbesondere zum Arbeiten beim Schruppschleifen an Decken und Deckenvorsprüngen von Vorteil.

Der Verdrehmechanismus, der eine Verdrehung des Griffteils 25 gegenüber dem Motorgehäuse 22 und eine Verrastung in den vorgegebenen Winkelpositionen ermöglicht, wird im folgenden näher anhand der Fig. 2 bis 4 beschrieben.

In Fig. 2 ist das Griffteil 25 zusammen mit dem hinteren Motorgehäuseteil 24 in einer Ansicht vergrößert dargestellt, wobei das linke Griffgehäuseteil 26 abgenommen ist, so daß der innere Aufbau, der etwas vereinfacht dargestellt ist, erkennbar ist.

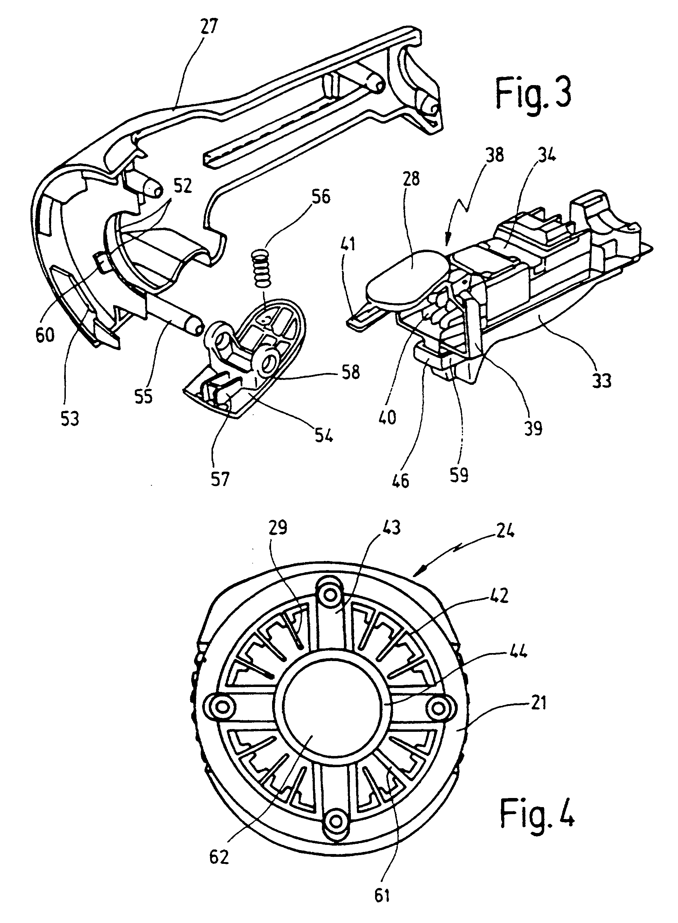

Das hintere Motorgehäuseteil 24 weist einen etwa kreisförmigen Querschnitt auf (vgl. Fig. 4) und ist an seinem vorderen Ende, das mit dem vorderen Motorgehäuseteil 23 zusammenfügbar ist, schräg nach unten abgeschnitten, so daß sich etwa ein schräger Kegelstumpf ergibt. Auf beiden Seiten des hinteren Motorgehäuseteils 24 ist seitlich eine Mehrzahl von Luftansaugschlitzen 31 übereinander angeordnet und innerhalb des hinteren Motorgehäuseteils 24 in einem geringen Abstand von den Luftansaugschlitzen 31 jeweils eine Prallplatte 30 vorgesehen, deren vorderes Ende in Fig. 2 aus dem hinteren Motorgehäuseteil 24 nach vorne hervorstehend erkennbar ist. Die Funktion dieser Prallplatten 30 wird im folgenden noch näher erläutert.

Das hintere Motorgehäuseteil 24 weist einen zentralen zylindrischen Zapfen 44 auf, der in das Griffteil 25 hinein vorsteht. Dieser Zapfen 44 dient als Durchlaß 62 (vgl. Fig. 4) zur Durchführung elektrischer Kabel 50 zwischen dem Motorgehäuse und dem Griffteil und dient ferner als Drehlager zur verdrehbaren Aufnahme des Griffteils 25 am hinteren Motorgehäuseteil 24. Das hintere Motorgehäuseteil 24 weist eine dem Griffteil 25 zugewandte Stirnfläche 21 auf, mit der ein Ringflansch 42 unter Bildung eines Zwischenraums 51 über radial verlaufende Stege 29 verbunden ist. Dieser Ringflansch 42 weist einen etwas geringeren Außendurchmesser als das hintere Motorgehäuseteil 24 an seiner Stirnfläche 21 auf, besitzt jedoch einen deutlich größeren Durchmesser als der damit koaxiale Zapfen 44.

Der Ringflansch 42 weist insgesamt vier radiale Aussparungen 43 auf, die jeweils um einen Winkel von 90° zueinander versetzt sind (vgl. Fig. 4).

An diesen Aussparungen 43 ist das Griffteil 25 mit Hilfe eines Verriegelungshebels 54 in den durch die Aussparungen 43 vorgegebenen Winkelpositionen mit dem hinteren Motorgehäuseteil 24 verrastbar.

Ferner ist ein Arretierungshebel 38 vorgesehen, der an einer Schwenkachse 37 schwenkbar aufgenommen ist und als ersten von der Schwenkachse 37 nach vorn in Richtung des Getriebegehäuses 12 abstehenden Teil die Drucktaste 28 aufweist, an deren vorderen Ende ein Vorsprung 41 angeformt ist, die bei fluchtender Ausrichtung mit einer Aussparung 43 in diesen einführbar ist. Der Arretierungshebel 38 weist ferner einen zweiten, starr mit der Drucktaste 28 verbundenen Teil auf, der etwa rechtwinklig zu der Drucktaste 28 nach unten hervorsteht und der an seinem unteren Ende mit dem Griffschalter 32 zusammenwirkt.

Der Griffschalter 32 weist eine Grifftaste 33 auf, die am hinteren unteren Ende des Griffteils 25 um eine Schwenkachse 45 verschwenkbar festgelegt ist. Die Grifftaste 33 wirkt mit einem Schaltermodul 34 zusammen, das oberhalb der Grifftaste 33 angeordnet ist, wobei die Grifftaste 33 durch eine Feder 36 nach unten vorgespannt ist und bei einer Bewegung nach oben gegen einen an der Unterseite des Schaltermoduls 34 angeordneten Schaltstift 35 zum Ein- und Ausschalten des Elektromotors 14 wirkt.

Die Grifftaste 33 weist an ihrem vorderen, dem hinteren Motorgehäuseteil 24 zugewandten Ende an der rechten und linken Seite je einen Fortsatz 59 auf, die durch einen Quersteg 46 am äußeren Ende miteinander verbunden sind, so daß insgesamt am vorderen Ende der Grifftaste 43 eine etwa rechteckförmige Ausnehmung gebildet ist, in der das untere Ende des zweiten Teils 39 des Arretierungshebels 38 um einen gewissen Betrag beweglich ist.

An seinem unteren Ende weist der zweite Teil 39 des Arretierungshebels 38 einen Vorsprung 48 auf, der als Anschlag für den Quersteg 46 der Grifftaste 33 dient.

Der Arretierungshebel 38 ist durch eine Feder 47, die auf den zweiten Teil 39 wirkt, derart vorgespannt, daß der Arretierungshebel 38 in der Darstellung gemäß Fig. 2 im Uhrzeigersinn beaufschlagt wird, so daß die Drucktaste 28 nach oben vorgespannt ist.

In der in Fig. 2 gezeigten Stellung fluchtet der Vorsprung 41 der Drucktaste 28 mit einer der Aussparungen 43, so daß die Drucktaste 28 bereits durch Eindrücken in die dargestellte Aktivierungsstellung überführt werden konnte. Durch das Eindrükken der Drucktaste 28 konnte die Grifftaste 33 mit ihrem Quersteg 46 an dem Vorsprung 48 des zweiten Teils 39 des Arretierungshebels vorbei entgegen der Kraft der Feder 36 nach oben bewegt werden, um so das Schaltermodul 34 zu betätigen, um das Elektrowerkzeug 10 einzuschalten.

Ist diese Stellung einmal erreicht, so kann die Drucktaste 28 losgelassen werden, da ein Rückschwenken des Arretierungshebels 38 unter Wirkung der Kraft der Feder 47 aus seiner Aktivierungsstellung in seine Ruhestellung dadurch verhindert wird, daß eine Vorderfläche 49 des zweiten Teils 39 des Arretierungshebels 38 von innen an den Quersteg 46 der Grifftaste 33 anschlägt.

Es ergibt sich somit eine Dauerbetriebsstellung, in der lediglich die Grifftaste 33 weiter angezogen gehalten werden muß, um ein ständiges Arbeiten mit dem Elektrowerkzeug 10 zu ermöglichen.

Wird aus dieser in Fig. 2 gezeigten Position nunmehr die Grifftaste 33 losgelassen, so bewegt sich die Grifftaste 33 unter der Wirkung der Feder 36 nach unten, so daß ihr Quersteg 46 an dem Vorsprung 48 des zweiten Teils 39 des Arretierungshebels 38 vorbei bewegt wird und sich nunmehr der Arretierungshebel 38 aus seiner Aktivierungsstellung unter der Wirkung der Feder 47 in seine Ruhestellung oder Ausgangsstellung verschwenkt. Ist diese Stellung eingenommen, so kann die Grifftaste 33 nicht mehr nach oben bewegt werden, da der Quersteg 46 an dem Vorsprung 48 des zweiten Teils 39 des Arretierungshebels 38 anschlägt.

Soll der Motor eingeschaltet werden, so muß also zunächst die Drucktaste 28 gedrückt werden, wodurch sich der Arretierungshebel 38 gemäß Fig. 2 entgegen dem Uhrzeigersinn verschwenkt, so daß nunmehr die Grifftaste 33 mit ihrem Quersteg 46 an dem Vorsprung 48 vorbei nach oben verschwenkt werden kann, um den Schaltstift 35 des Schaltermoduls 34 zu betätigen.

In Fig. 2 ist ferner am unteren Ende des Griffteils 25 der Verriegelungshebel 54 erkennbar, der mit einer Aufnahme 58 an einer Schwenkachse 55 des zweiten oder rechten Griffgehäuseteils 27 verschwenkbar aufgenommen ist (vgl. auch Fig. 3). Dieser Verriegelungshebel 54 ist durch eine Feder 56 derart vorgespannt, daß er bei Ausrichtung des Griffteils 25 mit einer der radialen Aussparungen 43 mit einem Vorsprung 57 in die betreffende Aussparung 43 am hinteren Motorgehäuseteil 24 eingreift und das Griffteil 25 so gegen eine Verdrehung gegenüber dem hinteren Motorgehäuseteil 24 sperrt.

Der Verriegelungshebel 54 bewirkt, daß eine Verdrehung des Griffteils 25 gegenüber dem Motorgehäuse 22 nur dann möglich ist, wenn gezielt der Verriegelungshebel 54 gedrückt wird. Anschließend kann das Griffteil 25 verdreht werden, bis nach einer Verdrehung um 90° oder ein Vielfaches davon der Verriegelungshebel 54 wieder mit einer radialen Aussparung 43 des Ringflansches 42 ausgerichtet ist und der Vorsprung 57 des Verriegelungshebels 54 unter Wirkung der Feder 56 mit ihrem Vorsprung 57 in die radiale Aussparung 43 des Ringflansches 42 eingreift und das Griffteil 25 gegen eine weitere Verdrehung verriegelt. Die Funktion der Arretierung des Griffteils 25 in einer der vorgegebenen Winkelposition am Motorgehäuse 22 wird auf diese Weise von der Funktion der Drucktaste 28 entkoppelt, die als Einschaltsperre gegen ein unbeabsichtigtes Einschalten des Elektromotors dient, sich aber zur Verrastung der gleichen radialen Aussparung 43 bedient wie der Verriegelungshebel 54.

Das Griffteil 25 ist durch von beiden Griffgehäuseteilen 26, 27 nach innen hervorstehende Stege 52, 53 an dem Zapfen 44 einerseits und an dem Ringflansch 42 andererseits geführt. Wie in Fig. 3 erkennbar, weist das rechte Griffgehäuseteil 27 zwei zueinander parallele Ringstege 52 auf, die eine erste Führung auf der Oberfläche des Zapfens 44 bewirken, sowie ferner an seinem dem hinteren Motorgehäuseteil 24 zugewandten Ende eine Mehrzahl von in Umfangsrichtung verlaufenden Ringstegabschnitten 53, die in den Zwischenraum 51 zwischen der Stirnseite 21 und dem Ringflansch 42 eingreifen.

Da der Ringflansch 42 über einzelne radial verlaufende Rippen 29 mit der Stirnseite 21 des hinteren Motorgehäuseteils 24 verbunden ist, ergibt sich so eine verringerte Auflagefläche der Stege 53 und in Verbindung mit den parallel zueinander verlaufenden Stegen 52, die auf dem Zapfen 44 aufliegen, eine äußerst zuverlässige Drehführung für das Griffteil 25 am hinteren Motorgehäuseteil 24, jedoch mit einem relativ geringen Reibungswiderstand.

Zwischen dem Griffteil 25 und dem hinteren Motorgehäuseteil 24 ist ferner eine Drehwinkelbegrenzung vorgesehen, die durch einen Vorsprung 60 am rechten Griffgehäuseteil 27 (vgl. Fig. 3) und durch eine Radialrippe 61 (vgl. Fig. 4) am hinteren Motorgehäuseteil 24 gebildet ist, die sich zwischen dem Zapfen 44 und dem äußeren Rand des Ringflansches 42 erstreckt. Damit wird es vermieden, daß das Griffteil 25 in eine Richtung um 360° oder mehr gedreht werden kann.

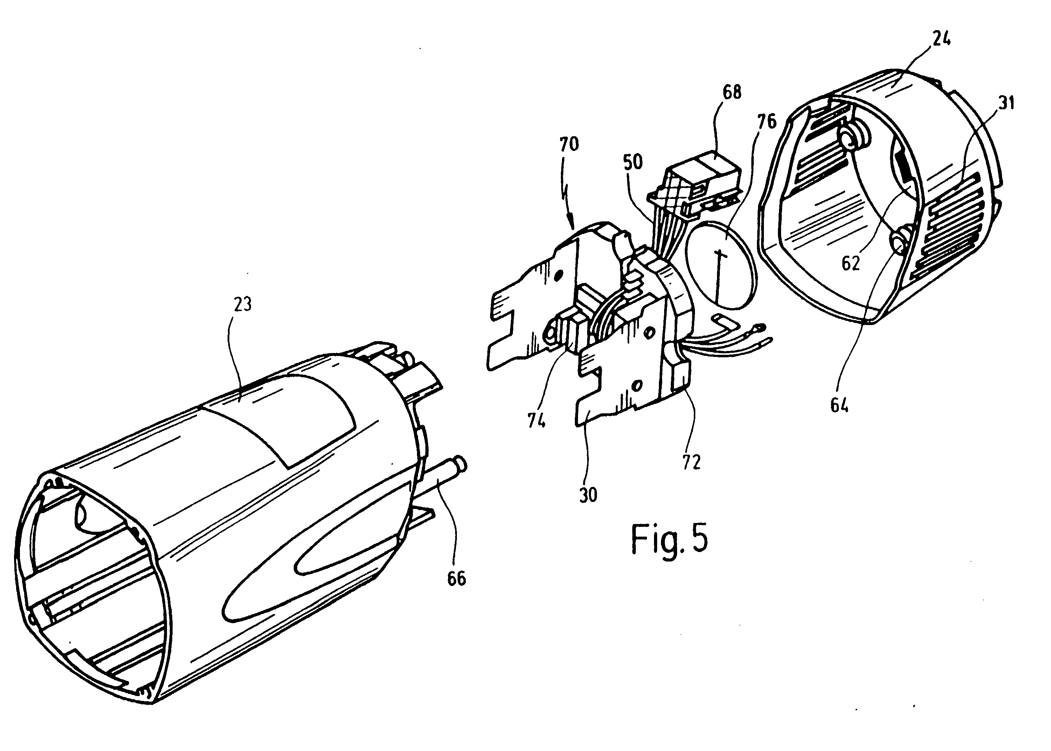

In Fig. 5 sind in einer Explosionsdarstellung das vordere Motorgehäuseteil 23, das hintere Motorgehäuseteil 24 sowie ein in das hintere Motorgehäuseteil 24 einschiebbares Einschubelement 70 nebst Zubehörteilen dargestellt und werden im folgenden näher erläutert.

Das vordere Motorgehäuseteil 23 dient zur Aufnahme des Elektromotors 14. Dagegen wird im hinteren Motorgehäuseteil 24 das Einschubelement 70 aufgenommen, das aus einer sich über den Querschnitt des Motorgehäuseteils 24 erstreckenden Grundplatte 72 besteht, mit der Elektronikkomponenten 74 zur Steuerung des Elektrowerkzeuges 10 vergossen sind und an deren linker und rechter Seite je eine aus Aluminiumblech bestehende Prallplatte 30 nach vorne hervorsteht.

Beim Betrieb des Elektrowerkzeugs 10 wird über die Luftschlitze 31 an beiden Seiten des hinteren Motorgehäuseteils 24 Kühlluft angesaugt, die zunächst auf die unmittelbar hinter den Luftansaugschlitzen 31 angeordneten Prallplatten 30 trifft, was zur Ablenkung von Staubpartikeln und anderen Verunreinigungen führt, die ggf. beim Arbeiten in einer stark verschmutzten Umgebung mit angesaugt werden könnten. (Die Luft tritt über nicht dargestellte Luftschlitze im Bereich des Getriebegehäuses 12 wieder aus). Diese Anordnung wirkt sich vorteilhaft auf die Lebensdauer des Elektromotors 14 aus. Die Prallplatten 30 sind ferner gleichzeitig als Kühlkörper für einzelne der Elektronikkomponenten 74 ausgebildet, so daß diese durch den angesaugten Luftstrom zusätzlich gekühlt werden. Dies trägt zur Betriebssicherheit der Elektronikkomponenten 74 bei.

Während sich bei herkömmlichen Winkelschleifern die Luftansaugschlitze bisher im Griffteil 25, d.h. in unmittelbarer Nähe des Griffschalters 32 befanden, sind die Luftansaugschlitze 31 nunmehr strömungstechnisch vom Griffteil 25 getrennt im hinteren Motorgehäuseteil 24 vorgesehen. Dabei wird die Durchführung 62 für die Kabel 50, die mit einem Stecker 68 zur Verbindung mit entsprechenden Anschlußstiften 40 am Schaltermodul 34 versehen sind (vgl. Fig. 3) durch die Grundplatte 72 des Einschubelementes 70 weitgehend verschlossen. Zusätzlich ist eine elastische Dichtscheibe 76 vorgesehen, die auf die Kabel 50 aufgesteckt wird und sich zusammen mit diesen innerhalb des Durchlasses 62 des Zapfens 44 befindet, um diesen zusätzlich auch bei einer Verdrehung des Griffteils 25 abzudichten.

Auf diese Weise wird es vermieden, daß verschmutzte Luft in den Bereich des Griffschalters 32 gelangt und somit dessen Funktion vorzeitig beeinträchtigt.

Dadurch, daß das Motorgehäuse 22 zweiteilig mit einem vorderen Motorgehäuseteil 23 und einem hinteren Motorgehäuseteil 24 ausgebildet ist, wird die Herstellung und Montage erheblich vereinfacht. Das Einschubelement 70 mit den Elektronikkomponenten 74 und den Prallplatten 30 wird in das hintere Motorgehäuseteil 24 eingesetzt, während der Elektromotor 14 im vorderen Motorgehäuseteil 23 montiert wird; anschließend werden beide Komponenten durch Eindrehen von Schrauben im hinteren Motorgehäuseteil 24 befindliche Schraublöcher 64 in Schraubaufnahmen 66 in Form von Zapfen am vorderen Motorgehäuseteil 23 fest miteinander verbunden.

## Patentansprüche

1. Elektrowerkzeug, insbesondere Winkelschleifer (10), mit einem länglichen Motorgehäuse (22), in dem ein Elektromomotor (14) aufgenommen ist, mit einem Getriebegehäuse (12) an einem ersten Ende des Motorgehäuses (22) zur Aufnahme eines Getriebes (16) zum Antrieb einer Arbeitsspindel (18), und mit einem Griffteil (25), das an einem zweiten Ende (24) des Motorgehäuses (22) drehbar festgelegt ist und in dem ein Griffschalter (32) angeordnet ist, wobei das Griffteil (25) gegenüber dem Motorgehäuse (22) in mindestens vier vorgegebene Winkelpositionen verdrehbar und in diesen verrastbar ist, **dadurch gekennzeichnet, daß** am Griffteil (25) ein Arretierungshebel (38) an einer Schwenkachse (37) verschwenkbar festgelegt ist, der einen ersten als Drucktaste (28) ausgebildeten von der Schwenkachse (37) in Richtung des Motorgehäuses (22) abstehenden Teil aufweist, an dessen äußerem Ende ein Vorsprung (41) ausgebildet ist, der in eine der Aussparungen (43) eines am Motorgehäuse (22) vorgesehenen zentralen Ringflansches (42) einrastbar ist, und der einen etwa rechtwinklig zum ersten Teil von der Schwenkachse (37) abstehenden zweiten Teil (39) aufweist, der mit der Grifftaste (33) des Griffschalters (32) derart zusammenwirkt, daß ein Eindrücken der Grifftaste (33) zum Einschalten des Elektromotors (14) nur dann ermöglicht ist, wenn zuvor die Drucktaste (28) durch Eindrücken in eine Aktivierungsstellung überführt wurde, so daß der Vorsprung (41) des Arretierungshebels (38) in eine der radialen Aussparungen (43) am Ringflansch (42) des Motorgehäuses (22) eingreift.

2. Elektrowerkzeug nach Anspruch 1, **dadurch gekennzeichnet, daß** die vorgegebenen Winkelpositionen jeweils um einen Winkel von 90° zueinander versetzt sind.

3. Elektrowerkzeug nach Anspruch 2, **dadurch gekennzeichnet, daß** das Griffteil (25) von einer Grundposition aus in eine Richtung um 90° und in eine entgegengesetzte Richtung um zweimal 90° verdrehbar ist.

4. Elektrowerkzeug nach einem der vorhergehenden Ansprüche, **dadurch gekennzeichnet, daß** zwischen Motorgehäuse (22) und Griffteil (25) eine Drehwinkelbegrenzung (60, 61) zur Begrenzung des maximalen Drehwinkels zwischen dem Motorgehäuse (22) und dem Griffteil (25) vorgesehen ist.

5. Elektrowerkzeug nach einem der vorhergehenden Ansprüche, **dadurch gekennzeichnet, daß** der Griffschalter (32) eine Grifftaste (33) aufweist, die gegen eine Betätigung verriegelt ist, wenn sich das Griffteil (25) nicht in einer der vorgegebenen Winkelpositionen befindet und mit dem Motorgehäuse (22) verrastet ist.

6. Elektrowerkzeug nach Anspruch 5, **dadurch gekennzeichnet, daß** am Motorgehäuse (22) ein zentraler Ringflansch (42) vorgesehen ist, in dem radiale Aussparungen (43) vorgesehen sind, in die ein Vorsprung (41) eines verschwenkbar gelagerten und in eine Arretierungsstellung vorgespannten Verriegelungshebels (54) in jeweils einer der vorgegebenen Winkelpositionen einrastbar ist.

7. Elektrowerkzeug nach einem der vorhergehenden Ansprüche, **dadurch gekennzeichnet, daß** die Grifftaste (33) am dem Motorgehäuse (22) abgewandten Ende des Griffteils (25) verschwenkbar festgelegt ist und gegen eine Bewegung in die Aktivierungsstellung vorgespannt ist, und an ihrem freien Ende einen Steg (46) aufweist, der in einer Sperrstellung bei nicht eingedrückter Drucktaste (28) an einem Vorsprung (48) am zweiten Teil (39) des Arretierungshebels (38) anschlägt, so daß eine Betätigung der Grifftaste (33) zum Einschalten des Elektromotors (14) verhindert wird.

8. Elektrowerkzeug nach Anspruch 7, **dadurch gekennzeichnet, daß** bei eingedrückter Drucktaste (28) in einer Arbeitsstellung die Grifftaste (33) entgegen einer Federkraft an dem Vorsprung (48) vorbei in eine Aktivierungsstellung zum Einschalten des Elektromotors (14) bewegbar ist und daß der Steg (46) an der Grifftaste (33) mit dem zweiten Teil (39) des Arretierungshebels (38) zusammenwirkt, um eine Bewegung desselben aus der Aktivierungsstellung der Drucktaste (28) zu verhindern.

9. Elektrowerkzeug nach einem der vorhergehenden Ansprüche, **dadurch gekennzeichnet, daß** das Motorgehäuse (22) an seiner dem Griffteil (25) zugewandten Seite einen zentralen zylindrischen Zapfen (44) mit einem Durchlaß (62) zur Kabeldurchführung aufweist, der den Ringflansch (42) durchsetzt, und daß am Griffteil (25) nach innen hervorstehende Stege (52, 53) vorgesehen sind, die auf der Außenoberfläche des Zapfens (44) und in einem Zwischenraum (51) zwischen dem Ringflansch (42) und einer Stirnseite (21) des Motorgehäuses (22) geführt sind.

10. Elektrowerkzeug nach einem der vorhergehenden Ansprüche, **dadurch gekennzeichnet, daß** das Griffteil (25) keine Lüfterschlitze aufweist.

## Claims

1. A power tool, in particular a right-angle grinder (10), having an elongated motor housing (22) in which an electric motor (14) is received, having a gear drive housing (12) at a first end of the motor housing (22) to receive a gear drive (16) for driving a working spindle (18), and having a handle element (25) which is fastened rotatably at a second end (24) of the motor housing (22) and in which a grip switch (32) is arranged, wherein the handle element (25) is rotatable with respect to the motor housing (22) into at least four predefined angular positions and can be snap-locked in them, **characterized in that** there is fastened on the handle element (25), pivotably on a pivot shaft (37), an immobilization lever (38) that has a first part, protruding from the pivot shaft (37) toward the motor housing (22) and configured as a pushbutton (28), at whose outer end is configured a projection (41) that can be snaplocked into one of the recesses (43) of the annular flange (42); and that has a second part (39), protruding from the pivot shaft (37) approximately at right angles to the first part, that coacts with the grip button (33) of the grip switch (32) in such a way that the grip button (33) can be pushed in to switch on the electric motor (14) only if the pushbutton (28) has previously been transferred into an activation position by being pressed in, so that the projection (41) of the immobilization lever (38) engages into one of the radial recesses (43) on the annular flange (42) of the motor housing (22).

2. The power tool of claim 1, wherein the predefined angular positions are each offset from one another by an angle of 90°.

3. The power tool of claim 2, wherein the handle element (25) is rotatable, from a basic position, 90° in one direction and two times 90° in an opposite direction.

4. The power tool of one of the foregoing claims, wherein a rotation angle limiter (60, 61) is provided between the motor housing (22) and handle element (25) to limit the maximum rotation angle between the motor housing (22) and the handle element (25).

5. The power tool of one of the foregoing claims, wherein the grip switch (32) has a grip button (33) that is locked to prevent actuation if the handle element (25) is not in one of the predefined angular positions and snap-locked to the motor housing (22).

6. The power tool of claim 5, wherein there is provided on the motor housing (22) a central annular flange (42) in which radial recesses (43) are provided into which a projection (41) of a locking lever (54), mounted pivotably and preloaded into an immobilization position, can snap-lock in each of the respective predefined angular positions.

7. The power tool of any of the foregoing claims, wherein the grip button (33) is fastened pivotably at the end of the handle element (25) facing away from the motor housing (22) and preloaded against a movement into an activation position, and has at its free end a web (46) that, in a catch position when the pushbutton (28) is not pushed in, stops against a projection (48) on the second part (39) of the immobilization lever (38) so as to prevent actuation of the grip button (33) to switch on the electric motor (14).

8. The power tool of claim 7, wherein when the pushbutton (28) is pushed in in a working position, the grip button (33) is movable against a spring force past the projection (48) into an activation position in order to switch on the electric motor (14); and the web (46) on the grip button (33) coacts with the second part (39) of the immobilization lever (38) in order to prevent the latter from moving out of the activation position of the pushbutton (28).

9. The power tool of one of the foregoing claims, wherein the motor housing (22) has, on its side facing toward the handle element (25), a central cylindrical stem (44) having a leadthrough (62) for the passage of cables that passes through the annular flange (42); and inwardly protruding webs (52, 53), which are guided on the outer surface of the stem (44) and in a cavity (51) between the annular flange (42) and an end face (21) of the motor housing (22), are provided on the handle element (25).

10. The power tool of one of the foregoing claims, wherein the handle element (25) has no ventilation slots

## Revendications

1. Outil électrique, en particulier meuleuse d'angle (10), avec un carter de moteur de forme allongée (22) dans lequel est logé un moteur électrique (14), avec un carter de transmission (12) au niveau d'une première extrémité du carter de moteur (22) en vue du logement d'une transmission (16) destinée à l'entraînement d'une broche porte-outil (18), et avec une partie de prise (25) qui est fixée de manière pivotante à une seconde extrémité (24) du carter de moteur (22) et dans laquelle un interrupteur de poignée (32) est disposé, la partie de prise (25) étant mobile par rapport au carter de moteur (22) dans au moins quatre positions angulaires prédéfinies et pouvant être enclenchée dans ces dernières, **caractérisé en ce que** sur la partie de prise (25), un levier de blocage (38) est fixé de manière pivotante sur un axe de pivotement (37), ledit levier de blocage (38) présentant une première partie réalisée sous forme de bouton-poussoir (28) et distante de l'axe de pivotement (37) en direction du carter de moteur (22), une saillie (41) étant réalisée sur l'extrémité extérieure de ladite première partie qui peut être enclenchée dans un des évidements (43) d'une bride annulaire (42) centrale prévue sur le carter de moteur (22), et présentant une seconde partie (39) distante de l'axe de pivotement (37) de manière à peu prés perpendiculaire par rapport à la première partie, ladite seconde partie (39) coopérant avec la touche de poignée (33) de l'interrupteur de poignée (32) de telle manière qu'une pression de la touche de poignée (33) en vue de l'enclenchement du moteur électrique (14) n'est rendue possible que dans le cas où le bouton-poussoir (28) serait déplacé au préalable par pression en une position d'activation de manière à ce que la saillie (41) du levier de blocage (38) engrène dans un des évidements radiaux (43) au niveau de la bride annulaire (42) du carter de moteur (22).

2. Outil électrique selon la revendication 1, **caractérisé en ce que** les positions angulaires prédéfinies sont décalées à chaque fois d'un angle de 90° les unes par rapport aux autres.

3. Outil électrique selon la revendication 2, **caractérisé en ce que** la partie de prise (25) est mobile de 90° à partir d'une position de base dans une direction et de deux fois 90° dans une direction opposée.

4. Outil électrique selon l'une quelconque des revendications précédentes, **caractérisé en ce qu'**une limitation d'angle de rotation (60, 61) est prévue entre le carter de moteur (22) et la partie de prise (25) en vue de la limitation de l'angle de rotation maximal entre le carter de moteur (22) et la partie de prise (25).

5. Outil électrique selon l'une quelconque des revendications précédentes, **caractérisé en ce que** l'interrupteur de poignée (32) présente une touche de poignée (33) qui est verrouillée contre un actionnement lorsque la partie de prise (25) ne se trouve pas dans une des positions angulaires prédéfinies et qu'elle est enclenchée avec le carter de moteur (22).

6. Outil électrique selon la revendication 5, **caractérisé en ce qu'**une bride annulaire (42) centrale est prévue sur le carter de moteur (22) dans laquelle des évidements radiaux (43) sont prévus dans lesquels une saillie (41) d'un levier de blocage (54) logé de manière pivotante et précontraint dans une position de blocage peut être enclenchée à chaque fois dans une des positions angulaires prédéfinies.

7. Outil électrique selon l'une quelconque des revendications précédentes, **caractérisé en ce que** la touche de poignée (33) est fixée de manière pivotante à l'extrémité de la partie de prise (25) de dos au carter de moteur (22) et est précontrainte contre un mouvement dans la position d'activation, et présente une entretoise (46) au niveau de son extrémité libre qui vient en butée dans une position de blocage en cas de bouton-poussoir (28) non pressé contre une saillie (48) au niveau de la seconde partie (39) du levier de blocage (38) de manière à ce qu'un actionnement de la touche de poignée (33) en vue de l'enclenchement du moteur électrique (14) est empêché.

8. Outil électrique selon la revendication 7, **caractérisé en ce qu'**en cas de bouton-poussoir (28) pressé dans une position de travail, la touche de poignée (33) est mobile à l'encontre d'une force élastique le long de la saillie (48) dans une position d'activation en vue de l'enclenchement du moteur électrique (14) et **en ce que** l'entretoise (46) coopère au niveau de la touche de poignée (33) avec la seconde partie (39) du levier de blocage (38) afin d'empêcher un mouvement de ce dernier à partir de la position d'activation du bouton-poussoir (28).

9. Outil électrique selon l'une quelconque des revendications précédentes, **caractérisé en ce que** le carter de moteur (22) présente, au niveau de son côté face à la partie de prise (25), un tenon (44) cylindrique central avec un passage (62) destiné à la traversée de câble qui traverse la bride annulaire (42), et **en ce que** des entretoises (52, 53) en saillie vers l'intérieur sont prévues sur la partie de prise (25) qui sont guidées sur la surface extérieure du tenon (44) et dans un espace (51) entre la bride annulaire (42) et une face terminale (21) du carter de moteur (22).

10. Outil électrique selon l'une quelconque des revendications précédentes, **caractérisé en ce que** la partie de prise (25) ne présente aucune fente de ventilation.
